# EUROPEAN PATENT APPLICATION

(11) **EP 1 684 018 A1**
(43) Date of publication of application: **26.07.2006**
(21) Application number: 04425964.6
(22) Date of filing: 30.12.2004
(51) Int. Cl.: F24C 15/32, A47J 27/16, A47J 27/04

(54) **Steam oven with accessible filter for limestone and tank for water charging with leakproof draft**

(71) Applicant: Filippi S.r.l., 35010 S. Giorgio delle Pertiche (IT)
(72) Inventor: Filippi, Filippo, 35010 S, Giorgio delle Pertche (PD) (IT)
(74) Representative: Vinci, Marcello

(57) **Abstract**

It is a steam oven, comprising a tank for the water to be vaporized provided with a rigid and/or flexible draft duct, with at least an horizontal portion and wherein said draft duct is applied near the upper edge of the tank so that the lower opening of said draft duct reaches and or is near the bottom of the tank and so that the horizontal portion is connected with the drawing duct of the oven when the tank is positioned in its seat in the oven.

## Description

### FIELD OF THE INVENTION

This patent relates to the field of kitchen appliances, and in particular it concerns ovens for steam cooking.

### BACKGROUND OF THE INVENTION

Ovens for steam cooking, where the water is vaporized and blown into the oven, are known.

Said steam ovens comprise a tank for the water to be vaporized, a pump for the drawing of water, a vaporizer.

A cleaning system pumps the water and the detached limestone from the vaporizing chamber.

The thus constituted steam ovens have many drawbacks and problems.

The water used for steam production in said ovens is contained in proper tank that can be extract for its topping up.

The extractable tanks of the steam ovens has on the bottom a gravity-activated valve that is coupled with a seat for water withdrawing provided with a finger opening device of said valve.

Said system for the opening/closing of the tank and the water drawing has the drawback that, by lifting and positioning the tank back in its seat, that is during the passing from the closing position to the opening position of the valve of the tank and vice versa, an even small amount of water leaks from the tank pouring on said seat for the drawing of water from the oven.

Said leaked water deposits limestone on the withdrawing seat, on the valve of the tank, thus prejudicing its functioning, and on the tank housing compartment.

There are other mechanisms and devices for the drawing of water from the tank, but few assure an optimum cleaning.

The water introduced in the tank is not completely distilled and/or demineralised and, with the vaporization, it deposits limestone in the vaporizing chamber thus reducing the thermal transmission, the vaporization ability, and reducing the volume of vaporizable water.

In order to eliminate the limestone from the vaporizing chamber water is introduced into the chamber itself, heated and removed, together with the detached limestone, by a pump.

Said limestone, beside obstructing the passage openings, can reach the pump prejudicing its functioning and damaging it.

The limestone obstruction, mainly due to large and medium sized pieces of limestone, compels the user to difficult operations for the disassembly of panels and of parts of the steam oven, or also, in some cases, to remove the oven from its seat.

### SUMMARY OF THE INVENTION

In order to overcome to the above-cited drawbacks a new steam oven with removable filter for limestone and tank for the charging of water with leakproof draft has been studied and carried out

Aim of the new oven is to allow the removing and the application of the tank, and the drawing of the water from the tank, without spilling water.

Other aim of the new steam oven is to allow a comfortable and simple cleaning of the parts and the ducts of the tank that bring the water to the drawing duct of the oven itself.

Other aim of the new steam oven is to carry out the filtering of the cleaning water of the vaporizing chamber so as to preserve the cleaning pump.

These and other direct and complementary aims are achieved by the new steam oven whose tank for the water to be vaporized is provided with a draft duct, applied in a removable way on the upper part of the tank itself. The horizontal portion of said duct is fit for coupling with the drawing duct of the oven when the tank in positioned in its seat in the oven itself.

Said draft duct can be realized of a reverse L-shaped duct provided with a clutch or adapter fit for coupling it with the tank, or it can be integral with a cap fixable on a corresponding hole in the upper part of the tank.

The oven is provided with a filter for the interception of large and medium-sized limestone particles positioned between the cleaning pump and the vaporizing chamber. Said filter is dislocated behind the wall of the compartment for the housing of the water tank or water container, or on the face behind the door so as to make its substitution or cleaning comfortable and quick.

Steam oven comprising a tank for the water to be vaporized provided with a generically reverse L-shaped draft duct, with an horizontal portion and wherein said draft duct is applied on the upper edge of the tank so that the lower opening of the vertical portion of said draft duct reaches and or is near to the bottom of the tank and so that the horizontal portion is connected with the drawing duct of the oven when the tank is positioned in its seat in the oven.

### DETAILED DESCRIPTION OF PREFERRED EMBODIMENT

The characteristics of the new steam oven with accessible filter for limestone and tank for water charging with leakproof draft will be clarified by the following description, referring to the figures attached as a non-limitative example.

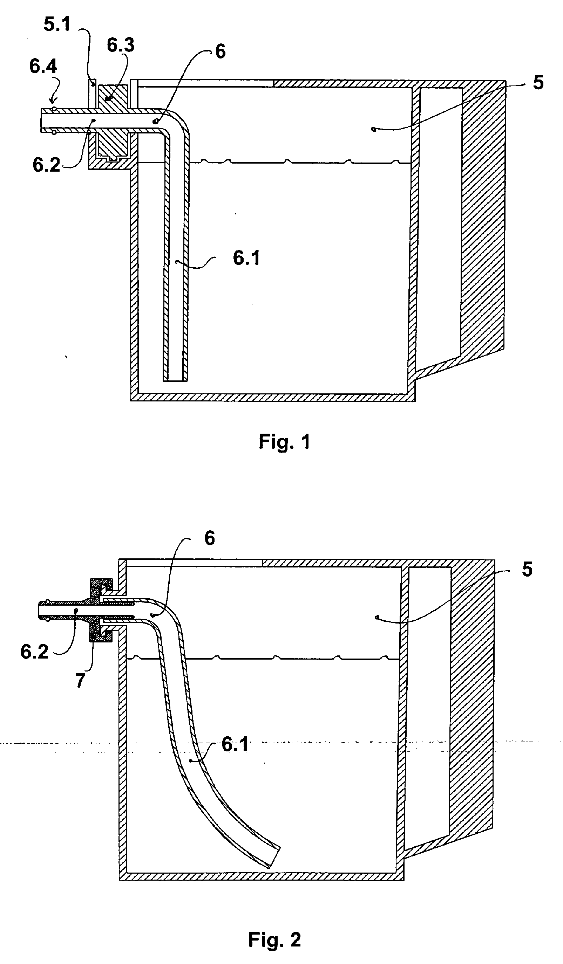

Figure 1 schematically represents a sectional view of the water tank (5) of the new steam oven with relative draft duct (6).

The tank (5) of the water to be vaporized has on the edge a seat or housing (5.1).

The draft duct (6) is generically reverse L shaped.

Substantially said draft duct (6) comprises a vertical portion (6.1) and a horizontal portion (6.2) with a clutch or adapter (6.3).

The vertical portion (6.1) of the draft duct (6) is fit for reaching the bottom or anyway the lower part of the tank (5) so as to draw all the water in the tank (5).

The horizontal portion (6.2) of the draft duct (6) is fit for connecting said vertical portion (6.1) with the withdrawing duct of the oven, when the tank (5) is housed in its seat in the oven.

The clutch or adapter (6.3) is inserted on said horizontal portion (6.2) of the draft duct (6) and is fit for being restrained on the proper seat (5.1) on the edge of the tank (5).

Said clutch or adapter (6.3) allows to hold the position of the draft duct (6) so that the lower end of the vertical portion (6.1) of the draft duct (6) is near the bottom of the tank (5) in a way to realize the coupling of the horizontal portion (6.2) of the draft duct (6) with the drawing duct of the oven also when the tank is not precisely inserted into its seat.

Near to the end of the horizontal portion (6.2) of the draft duct (6) there is a seal (6.4).

Being the interchange and the water withdrawing point near the upper edge of the tank (5) and being the water transferred to the oven by aspiration more than by gravity, it follows that there is not water spilling not even when the tank (5) is removed or inserted in its seat in the oven, and more than this there are no valves nor similar barriers that can undergo to obstruction by limestone.

The draft duct (6) with the clutch or adapter (6.3) is easily removable both for the substitution and for the maintenance.

Figure 2 represents a sectional view of a second solution for the realization of the water tank (5) with related draft duct (6).

In this example the horizontal portion (6.2) is integral with a cap (7) fixable on a corresponding hole in the upper part of the tank (5). The portion of the draft duct (6) inside the tank (5) is made of a pipe in silicone plastic.

Said tank (5) can be completely open in the upper part or, better, partially closed.

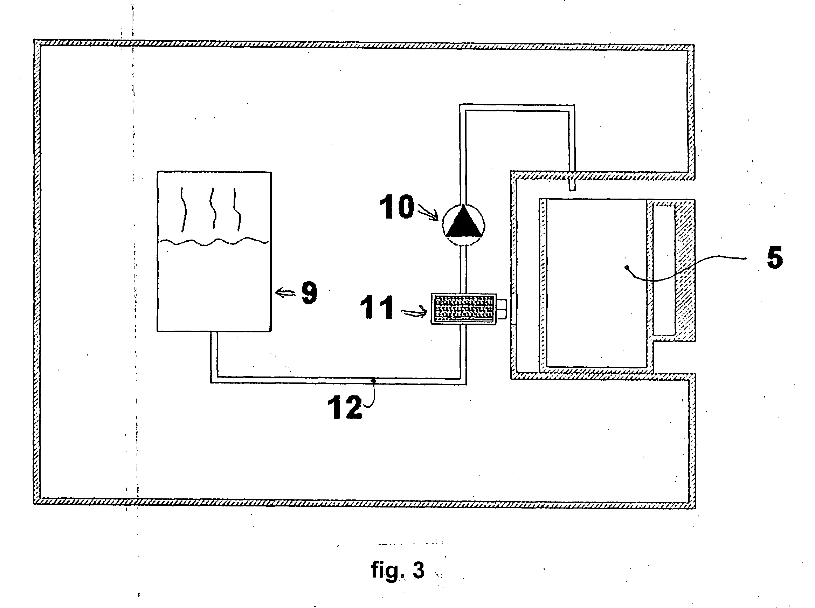

Figure 3 schematically represents an example for the realization of the cleaning mechanism of the vaporization chamber (9) with the pump (10) and the filter (11).

The vaporization chamber (9) is connected with the sucking pump (10) through a duct (12).

On said duct (12) a filter (11) is inserted, fit for holding large and medium-sized dimensions particles.

When, in order to remove the limestone, the cleaning of the vaporization chamber is to be realized, by introducing water in said vaporization chamber (9) and sucking it by said pump (10), the large and medium-sized limestone particles are intercepted by the filter (11) so that they don't damage said pump (10).

When the filter (11) exhausts its function and it is necessary to substitute and clean it, this can be done in a simple way, being the filter positioned in the front part of the oven, and accessible without requiring to disassembly or to remove big parts of the oven.

The new steam oven realized as afore-described has many advantages.

The tank (5) with draft duct (6) with the horizontal portion positioned on the upper part of the tank (5) itself avoids water spilling both during the use and during the extraction or the insertion of the tank (5) on its seat.

The removable filter (11) allows its simple substitution and/or cleaning.

With reference to the above description the following claims are put forth.

## Claims

1. Steam oven, **characterized in that** it comprises a tank (5) for the water to be vaporized provided with a rigid and/or flexible draft duct (6), with at least an horizontal portion (6.2) and wherein said draft duct (6) is applied near the upper edge of the tank (5) so that the lower opening of said draft duct (6) reaches and or is near the bottom of the tank (5) and so that the horizontal portion (6.2) is connected with the drawing duct of the oven when the tank (5) is positioned in its seat in the oven.

2. Steam oven according to claim 1 **characterized in that** the horizontal portion (6.2) is integral with a cap (7) fixable on a corresponding hole in the upper part of the tank (5).

3. Steam oven according to claim 1 **characterized in that** the draft duct (6) is generically reverse L-shaped with horizontal portion (6.2) and generically vertical portion (6.1) and wherein said horizontal portion (6.2) has a clutch or adapter (6.3) fit for being received on a proper seat (5.1) on the edge of the tank (5), in order to make everything easy to remove, both for the substitution and for the cleaning.

4. Steam oven according to claims 2, 3 **characterized in that** the end of the horizontal portion (6.2) of the draft duct (6) is provided with seal (6.4)

5. Steam oven **characterized in that** it comprises a filter (11) for limestone particles positioned between the vaporizing chamber (9) and the cleaning pump (10) and wherein said filter is removable and substitutable.
